# FASCICULE DE BREVET EUROPEEN

(11) **EP 4 058 315 B1**
(45) Date de publication et mention de la délivrance du brevet: **16.07.2025**
(21) Numéro de dépôt: 20803604.6
(22) Date de dépôt: 13.11.2020
(51) Int. Cl.: B60K 6/442, B60K 6/547, B60K 6/36, F16H 3/091

(54) **GROUPE MOTOPROPULSEUR HYBRIDE COMPORTANT DEUX MOTEURS ÉLECTRIQUES ET UN MOTEUR THERMIQUE NON COAXIAUX, ET SES PROCÉDÉS DE COMMANDE**
HYBRIDER ANTRIEBSSTRANG MIT ZWEI NICHT KOAXIALEN ELEKTROMOTOREN UND EINEM VERBRENNUNGSMOTOR SOWIE VERFAHREN ZU DESSEN STEUERUNG
HYBRID POWERTRAIN COMPRISING TWO ELECTRIC MOTORS AND ONE COMBUSTION ENGINE WHICH ARE NOT COAXIAL, AND METHODS FOR CONTROLLING THE SAME

(30) Priorité: 14.11.2019 FR 1912704
(43) Date de publication de la demande: 21.09.2022
(73) Titulaire: NEW H POWERTRAIN HOLDING, S.L.U., 47008 Valladolid (ES)
(72) Inventeur: LASSEUR, Bertrand, 92370 Chaville (FR)
(74) Mandataire: Renault Group
(86) Numéro de dépôt international: PCT/EP2020/082057
(87) Numéro de publication internationale: WO 2021/094532

(56) Documents cités:
- AT-B1- 520 555
- CN-A- 108 725 178
- DE-A1- 102010 022 395

## Description

### Domaine technique de l'invention

La présente invention concerne une architecture générale d'un groupe motopropulseur dit « hybride », notamment pour un véhicule automobile routier.

L'invention concerne plus particulièrement un groupe motopropulseur hybride comportant deux machines électriques et un moteur thermique.

L'invention concerne aussi le procédé de commande d'un tel groupe motopropulseur.

### Arrière-plan technique

On connait du document FR-A1-3.034.386 un groupe motopropulseur hybride de véhicule comportant trois sources motrices parmi lesquelles une machine électrique principale, une machine électrique secondaire et un moteur thermique dont les arbres sont parallèles, et une boîte de vitesses à arbres parallèles et à engrenages qui comporte trois arbres d'entrée parallèles et décalés latéralement dont chacun est relié à une des trois sources motrices, et deux coupleurs permettant d'établir sélectivement le transfert du couple fourni par l'arbre d'entrée de chaque source motrice à un arbre commun de sortie vers les roues du véhicule.

Une telle conception permet de disposer d'une chaine de traction ou de propulsion dite « multimodes » qui permet notamment l'utilisation simultanée ou découplée de trois sources motrices, pour disposer de nombreux modes de fonctionnement différents, électriques, hybrides ou thermiques.

La longueur totale « hors-tout » du groupe motopropulseur correspond globalement à la somme des longueurs « axiales » du moteur thermique, de la boîte de vitesses, et la machine électrique principale qui sont globalement alignés.

La machine électrique secondaire est adjacente latéralement au moteur thermique.

L'implantation transversale d'un tel groupe motopropulseur, par exemple dans le compartiment moteur avant d'un véhicule automobile, n'est pas possible si des équipements du moteur thermique tels qu'un turbocompresseur et / ou un catalyseur de dépollution sont trop volumineux et interfèrent avec la machine électrique secondaire implantée le long de l'un des côtés du moteur thermique.

Les documents CN 108 725 178 A et AT 520 555 B1 divulguent des autres groupes motopropulseurs hybrides comportant trois sources motrices.

L'invention vise à proposer une conception d'un tel groupe motopropulseur qui soit de longueur hors-tout réduite et d'une grande compacité latérale, tout en conservant ses différents modes de fonctionnement.

### Résumé de l'invention

L'invention propose un groupe motopropulseur hybride de véhicule comportant les caractéristiques de la revendication 1.

Selon d'autres caractéristiques avantageuses du groupe motopropulseur :
- les deux machines électriques principale et secondaire sont agencées sensiblement dans un même plan orthogonal aux arbres parallèles de la boîte de vitesses ;
- l'arbre d'entrée de la machine électrique principale est lié en permanence en rotation avec l'arbre commun de sortie par un pignon fixe porté par son arbre d'entrée qui engrène avec un pignon fixe porté par l'arbre commun de sortie ;
- un pignon fixe porté par l'arbre d'entrée de la machine électrique secondaire engrène en permanence avec l'un des deux pignons fous qui sont portés par l'arbre d'entrée du moteur thermique ;
- la boîte de vitesses comporte un arbre parallèle supplémentaire qui est décalé latéralement par rapport à l'arbre d'entrée du moteur thermique et qui porte deux pignons fixes dont chacun engrène en permanence avec un pignon qui est lié en rotation avec un pignon fou associé des deux pignons fous qui sont portés par l'arbre d'entrée du moteur thermique.

L'invention propose aussi un procédé de commande d'un groupe motopropulseur selon l'invention, le procédé comportant les caractéristiques de la revendication indépendante 6.

Selon d'autres caractéristiques avantageuses du procédé :
- la fermeture du deuxième coupleur permet de déplacer le véhicule en mode électrique avec seulement la machine électrique secondaire selon l'un ou l'autre de deux rapports de transmission ;
- la fermeture du deuxième coupleur permet de déplacer le véhicule en mode électrique avec la machine électrique principale et l'appoint de la machine électrique secondaire selon l'un ou l'autre de deux rapports de transmission ;

L'invention propose aussi des procédés de commande comportant les caractéristiques des revendications indépendantes 9 à 11. Selon d'autres caractéristiques avantageuses du procédé selon la revendication 11 :
- pour n'importe lequel des quatre rapports de transmission en mode thermique, le moteur thermique peut entraîner la machine électrique primaire en générateur de courant, et/ou la machine électrique secondaire en générateur de courant selon l'un ou l'autre de deux rapports, pour recharger les batteries du véhicule en roulage du véhicule.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une représentation schématique de l'architecture générale d'un premier exemple de réalisation d'un groupe motopropulseur selon l'invention ;
[Fig.2] - la figure 2 illustre un premier mode de fonctionnement purement électrique en marche avant avec le moteur électrique principal seul du groupe motopropulseur représenté à la figure 1;
[Fig.3] - la figure 3 illustre le premier mode de fonctionnement purement électrique avec le moteur électrique secondaire seul et selon un premier rapport de vitesse en marche avant ;
[Fig.4] - la figure 4 illustre le premier mode de fonctionnement purement électrique avec le moteur électrique secondaire seul et selon un deuxième rapport de vitesse en marche avant ;
[Fig.5] - la figure 5 illustre le premier mode de fonctionnement purement électrique avec les deux moteurs électriques principal et secondaire associés et selon un premier rapport de vitesse en marche avant ;
[Fig.6] - la figure 6 illustre le premier mode de fonctionnement purement électrique avec les deux moteurs électriques principal et secondaire associés et selon un deuxième rapport de vitesse en marche avant ;
[Fig.7] - la figure 7 illustre un deuxième mode de fonctionnement électrique dit « Range Extender » - en véhicule roulant en marche avant avec le moteur électrique principal en mode traction et la machine électrique secondaire ME2 en mode génératrice de courant selon un premier rapport de vitesse.
[Fig.8] - la figure 8 illustre le deuxième mode de fonctionnement dit « Range Extender » - en véhicule roulant en marche avant avec le moteur électrique principal en mode traction et la machine électrique secondaire ME2 en mode génératrice de courant selon un deuxième rapport de vitesse.
[Fig.9] - la figure 9 illustre le deuxième mode de fonctionnement dit « Range Extender » - en véhicule à l'arrêt - avec la machine électrique secondaire en mode génératrice de courant selon un premier rapport ;
[Fig.10] - la figure 10 illustre le deuxième mode de fonctionnement dit « Range Extender » - en véhicule à l'arrêt - avec la machine électrique secondaire en mode génératrice de courant selon un deuxième rapport ;
[Fig.11] - la figure 11 illustre un troisième mode de fonctionnement dit « hybride » thermique et électrique avec les trois sources motrices fonctionnant simultanément en mode traction, avec la puissance maximale disponible et selon une première combinaison entre les rapports du moteur électrique secondaire et du moteur thermique ;
[Fig.12] - la figure 12 illustre le troisième mode de fonctionnement dit « hybride » selon une deuxième combinaison entre les rapports du moteur électrique secondaire et du moteur thermique ;
[Fig.13] - la figure 13 illustre le troisième mode de fonctionnement dit « hybride » selon une troisième combinaison entre les rapports du moteur électrique secondaire et du moteur thermique ;
[Fig.14] - la figure 14 illustre le troisième mode de fonctionnement dit « hybride » selon une quatrième combinaison entre les rapports du moteur électrique secondaire et du moteur thermique ;
[Fig.15] - la figure 15 illustre un quatrième mode de fonctionnement purement thermique selon un premier rapport en prise directe du moteur thermique ;
[Fig.16] - la figure 16 illustre le quatrième mode de fonctionnement purement thermique selon un deuxième rapport en prise directe du moteur thermique ;
[Fig.17] - la figure 17 illustre le quatrième mode de fonctionnement purement thermique selon un troisième rapport en prise directe du moteur thermique ;
[Fig.18] - la figure 18 illustre le quatrième mode de fonctionnement purement thermique selon un quatrième rapport en prise directe du moteur thermique ;
[Fig.19] - la figure 19 est une représentation schématique de l'architecture générale d'un deuxième exemple de réalisation d'un groupe motopropulseur selon l'invention ;
[Fig.20] - la figure 20 est une représentation schématique de l'architecture générale d'un premier exemple de réalisation d'un groupe motopropulseur selon l'invention.

### Description détaillée de l'invention

Dans la description qui va suivre, des éléments identiques, similaires ou analogues seront désignés par les mêmes chiffres de référence.

### Premier exemple de réalisation

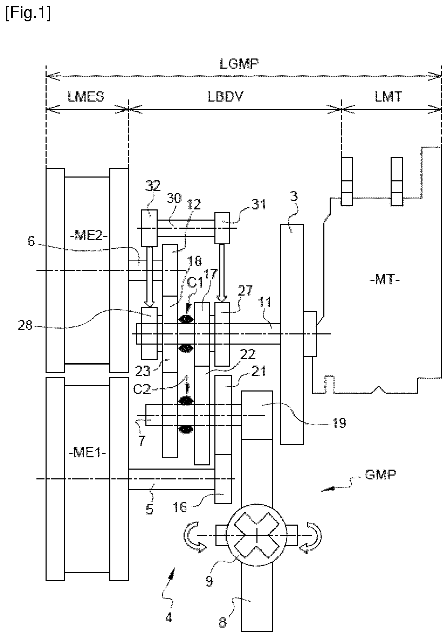

Le groupe motopropulseur hybride GMP de véhicule automobile représenté schématiquement à la figure 1, est composé de trois sources motrices MT, ME1, et ME2 reliées par des arbres d'entrée11, 5, 6, décalés latéralement, dans une boîte de vitesses 4 à arbres parallèles et à engrenages. Conformément aux enseignements de l'invention, selon la direction axiale commune aux arbres parallèles d'entrée 11, 5, 6 de la boîte de vitesses 4, le moteur thermique MT, la boîte de vitesses 4 et les deux machines électriques ME1-ME2 sont agencés axialement et successivement de droite à gauche.

En d'autres termes, selon la direction axiale commune aux arbres parallèles d'entrée 11, 5, 6 de la boîte de vitesses 4 est disposée axialement entre le moteur thermique MT d'une part et les deux machines électriques ME1-ME2 d'autre part.

Ainsi, la largeur totale LGMP du groupe motopropulseur GMP - qui correspond à la somme des largeurs transversales LMT+LBDV+LME respectivement du moteur thermique MT, de la boîte de vitesses 4 et de l'ensemble des deux machines électriques ME1 et ME2 - est réduite Les deux machines électriques ME1 et ME2 sont ici agencées à gauche de la boîte de vitesses 4, sensiblement dans un même plan orthogonal aux axes de rotation des arbres parallèles d'entrée 11, 5, 6 de la boîte de vitesses 4. La boîte de vitesses 4 comporte deux coupleurs C1, C2, permettant d'établir sélectivement le transfert du couple fourni par l'arbre d'entrée de chaque source motrice, sur un arbre commun de sortie 7, vers les roues du véhicule. Dans le mode de réalisation non limitatif de l'invention, illustré par les figures, les trois sources motrices sont respectivement une machine électrique principale ME1, une machine électrique secondaire ME2, et un moteur thermique MT.

Les couples des trois sources motrices MT, ME1 et ME2 sont réunis dans la boîte de vitesses 4.

L'arbre entrée 11 du moteur thermique MT n'est pas concentrique aux arbres d'entrée 5, 6 des machines électriques ME1 et ME2.

Les trois arbres d'entrée 11, 5, 6 des trois sources motrices MT, ME1 et ME2 sont décalés latéralement les uns par rapport aux autres, et ils sont reliés à l'arbre commun de sortie 7.

La boîte de vitesses 4 comporte ainsi :
- un arbre d'entrée 5 relié au rotor de la machine électrique principale ME1 ;
- un arbre d'entrée 6 relié au rotor de la machine électrique secondaire ME2 ;
- et un arbre d'entrée 11 relié directement au volant d'inertie 3 au vilebrequin du moteur thermique MT.

L'arbre commun de sortie, ou arbre secondaire, 7 entraîne une couronne 8 d'un différentiel 9 relié aux roues du véhicule (non représentées).

L'arbre d'entrée 11 du moteur thermique MT porte deux pignons fous 17, 18 dont chacun engrène avec un pignon fou, 22, 23 respectivement, ces deux pignons fous 22 et 23 étant portés par l'arbre commun de sortie 7.

La boîte 4 comporte deux coupleurs C1, C2.

Le premier coupleur C1 est agencé axialement entre les deux pignons fous 17 et 18, et il établit sélectivement la transmission du couple du moteur thermique MT par l'un ou l'autre des deux pignons fous 17 ou 18 sur l'un ou l'autre des deux pignons fous 23 ou 22 respectivement portés par l'arbre commun de sortie 7.

La transmission par les pignons 18 et 23 se fait selon un premier rapport R1, tandis que la transmission du couple par les pignons 17, 22 se fait selon un deuxième rapport R2.

La transmission par les pignons 17-27-31-32-28-18-23 se fait selon un troisième rapport R3, tandis que la transmission du couple par les pignons 18-28-32-31-27-17-22 se fait selon un quatrième rapport R4.

Le deuxième coupleur C2 est agencé axialement entre les deux pignons fous 22 et 23, et il établit sélectivement la liaison en rotation de l'un ou l'autre des deux pignons fous 22 ou 23 avec l'arbre commun de sortie 7.

De la droite vers la gauche, l'arbre commun de sortie 7 vers les roues du véhicule porte successivement un pignon fixe 19 d'attaque sur la couronne 8 du différentiel 9, un pignon fixe de ligne secondaire 21 et les deux pignons fous 23 et 22.

L'arbre d'entrée 5 de la machine électrique principale ME1, porte un seul pignon fixe 16 de renvoi qui engrène en permanence avec le pignon fixe de ligne secondaire 21 lié en rotation à l'arbre commun de sortie 7.

L'arbre d'entrée 6 de la machine électrique secondaire ME2, porte un seul pignon fixe 12 de renvoi qui engrène en permanence avec le pignon fou 18 porté par l'arbre d'entrée 11 du moteur thermique MT.

Le pignon fou 17 porté par l'arbre d'entrée 11 du moteur thermique MT est lié en rotation avec un autre pignon 27 pour constituer un couple de pignons fous 17-27.

De la même manière, le pignon fou 18 porté par l'arbre d'entrée 11 du moteur thermique MT est lié en rotation avec un autre pignon 28 pour constituer un autre couple de pignons fous 18-28.

Ainsi, de la droite vers la gauche, l'arbre d'entrée 11 du moteur thermique MT porte successivement le couple de pignons fous 17-27 et couple de pignons fous 18-28 entre lesquels est agencé le premier coupleur C1.

La boîte de vitesses 4 porte à rotation un arbre supplémentaire 30, qui est parallèle aux arbres d'entrée 11, 5 et 6, qui est monté fou à rotation et qui :
- à son extrémité de droite, porte un pignon fixe 31 qui engrène en permanence avec le pignon fou 27 du couple de pignons fous 17-27 ;
- et à son extrémité de gauche, porte un pignon fixe 32 qui engrène en permanence avec le pignon fou 28 du couple de pignons fous 18-28.

Les deux pignons 30 et 31 constituent ainsi un couple de pignons 31-32 liés en rotation.

L'arbre supplémentaire 30 lie ainsi en rotation les pignons 27 et 28, et donc les couples de pignons fous 17-27 et 18-28.

L'arbre supplémentaire 30, qui est décalé latéralement, est illustré schématiquement sur les figures et l'engrènement des pignons 31, 32 avec les pignons 27, 28 est représenté par des flèches.

On notera que chaque machine électrique ME1 ou ME2 peut fonctionner en moteur électrique pour participer à la traction du véhicule ou en génératrice électrique pour recharger des batteries de stockage d'énergie électrique.

L'architecture du groupe motopropulseur GMP qui vient d'être décrite permet de fonctionner :
a) - en mode purement électrique avec le moteur électrique principal ME1 seul, La machine électrique secondaire ME2 seul ou avec les deux moteurs électriques ME1 et ME2 associés et selon deux rapports différents de transmission ;
b) - en mode électrique dit « Range Extender », en véhicule roulant avec le moteur électrique principal ME1 en mode traction et la machine électrique secondaire ME2 en mode génératrice de courant, ou en véhicule à l'arrêt avec la machine électrique secondaire ME2 en mode génératrice de courant ;
c) - en mode « hybride » thermique et électrique avec les trois moteurs MT, ME1 et ME2 fonctionnant simultanément en mode traction, avec la puissance maximale disponible et selon quatre combinaisons possibles entre les rapports du moteur électrique secondaire ME2 et du moteur thermique MT ;
d) - et en mode purement thermique selon quatre rapports possibles en prise directe du moteur thermique MT.

### Premier mode de fonctionnement : purement électrique

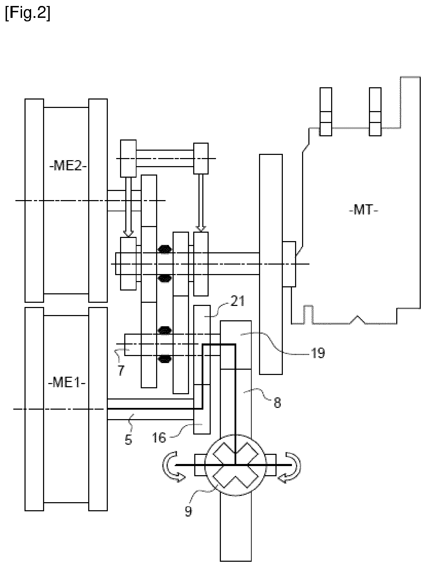

A la figure 2 les deux coupleurs C1 et C2 sont en position neutre.

La machine électrique principale ME1 est le seul moteur de traction.

La transmission du couple est la suivante :
ME1->16->21->19->8->9.

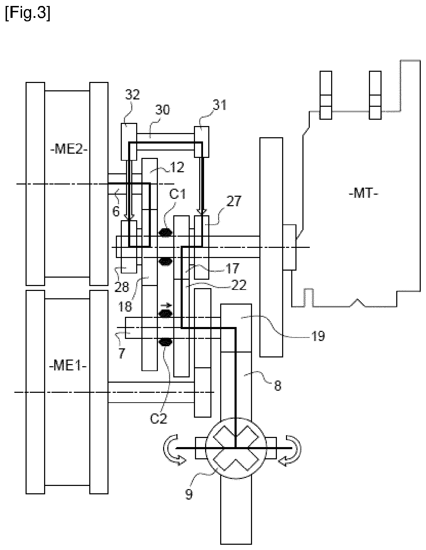

A la figure 3, le coupleur C1 est en position neutre et le coupleur C2 est en position engagée vers la droite pour lier en rotation l'arbre commun de sortie 7 et le pignon 22.

La machine électrique secondaire ME2 est le seul moteur de traction qui transmet son couple selon un premier rapport.

La transmission du couple est la suivante :
ME2-> 12-> 18-28->32-31->27-17->22->C2-> 19->8->9.

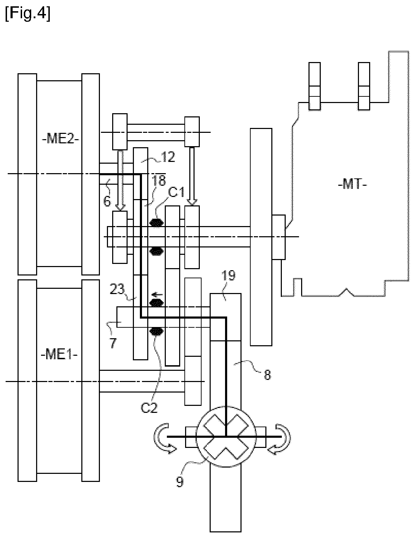

A la figure 4, le coupleur C1 est en position neutre et le coupleur C2 est en position engagée vers la gauche pour lier en rotation l'arbre commun de sortie 7 et le pignon 23.

La machine électrique secondaire ME2 est le seul moteur de traction qui transmet son couple selon un deuxième rapport.

La transmission du couple est la suivante :
ME2->12->18->23->C2->19->8->9.

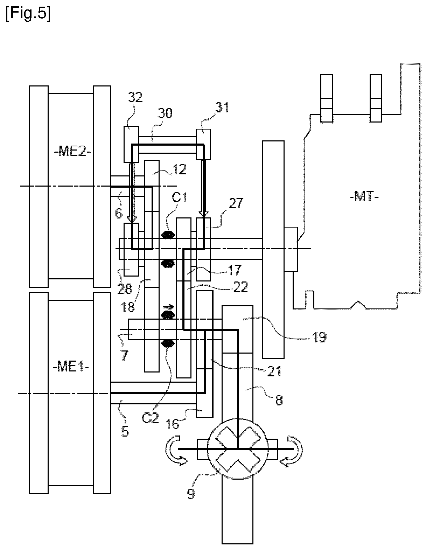

A la figure 5, le coupleur C1 est en position neutre et le coupleur C2 est en position engagée vers la droite pour lier en rotation l'arbre commun de sortie 7 et le pignon 22.

La machine électrique principale ME1 et la machine électrique secondaire ME2 sont tous les deux associées en moteurs de traction, avec le moteur électrique secondaire ME2 selon un premier rapport.

La transmission du couple est la suivante :
ME1->16->21->19->8->9
   et
ME2-> 12-> 18-28->32-31->27-17->22->C2-> 19->8->9.

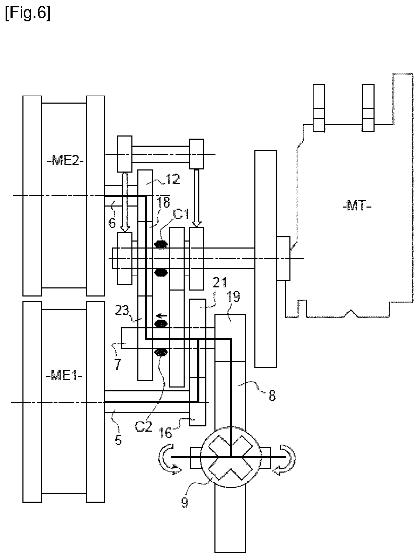

A la figure 6, le coupleur C1 est en position neutre et le coupleur C2 est en position engagée vers la gauche pour lier en rotation l'arbre commun de sortie 7 et le pignon 23.

La machine électrique principale ME1 et la machine électrique secondaire ME2 sont tous les deux associées en moteurs de traction, avec le moteur électrique secondaire ME2 selon un deuxième rapport.

La transmission du couple est la suivante :
ME1->16->21->19->8->9
   et
ME2->12->18->23->C2->19->8->9.

### Deuxième mode de fonctionnement : électrique et « Range Extender »

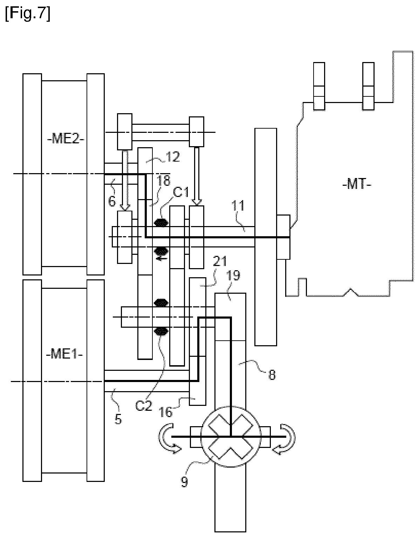

A la figure 7, le coupleur C2 est en position neutre et le coupleur C1 est en position engagée vers la gauche pour lier en rotation l'arbre 11 d'entrée du moteur thermique MT et le pignon 18.

La machine électrique secondaire ME2 fonctionne en génératrice de courant et elle est entraînée par le moteur thermique MT selon un premier rapport, par exemple pour recharger une unité de stockage en énergie électrique.

La transmission du couple est la suivante :
MT->C1->18->12->ME2

La première machine électrique ME1 est le seul moteur de traction pour entraîner le véhicule en marche avant.

La transmission du couple est la suivante :
ME1->16->21->19->8->9.

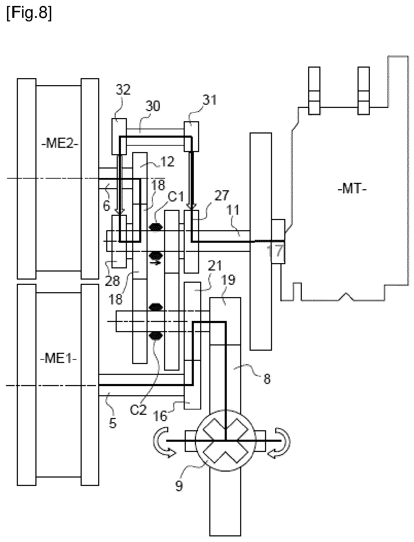

A la figure 8, le coupleur C2 est en position neutre et le coupleur C1 est en position engagée vers la droite pour lier en rotation l'arbre 11 d'entrée du moteur thermique MT et le couple de pignons 17-27.

La machine électrique secondaire ME2 fonctionne en génératrice de courant et elle est entraînée par le moteur thermique MT, par exemple pour recharger une unité de stockage en énergie électrique.

La transmission du couple est la suivante :
MT->C1-> 17-27->31-32->28-18-> 12->ME2.

La première machine électrique ME1 est le seul moteur de traction pour entraîner le véhicule en marche avant.

La transmission du couple est la suivante :
ME1->16->21->19->8->9.

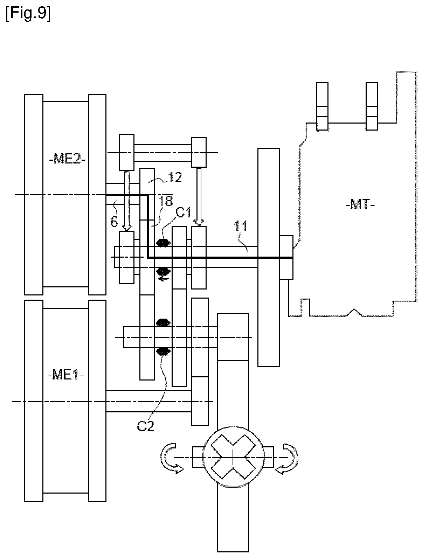

A la figure 9, le véhicule est à l'arrêt.

Le coupleur C2 est en position neutre et le coupleur C1 est en position engagée vers la gauche pour lier en rotation l'arbre 11 d'entrée du moteur thermique MT et le pignon 18.

La machine électrique secondaire ME2 fonctionne en génératrice de courant et elle est entraînée par le moteur thermique MT selon un premier rapport, par exemple pour recharger une unité de stockage en énergie électrique.

La transmission du couple est la suivante :
MT->18->12->ME2.

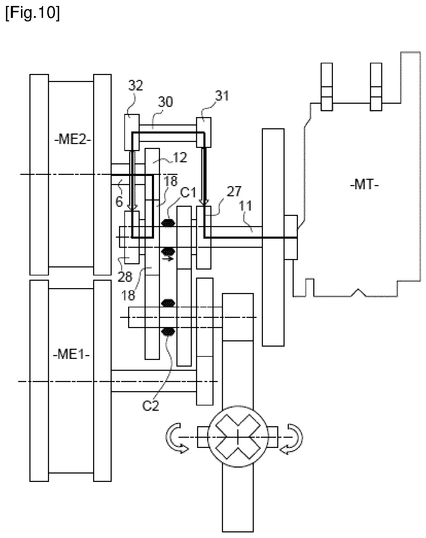

A la figure 10, le véhicule est à l'arrêt.

Le coupleur C2 est en position neutre et le coupleur C1 est en position engagée vers la droite pour lier en rotation l'arbre 11 d'entrée du moteur thermique MT et le couple de pignons 17-27.

La machine électrique secondaire ME2 fonctionne en génératrice de courant et elle est entraînée par le moteur thermique MT selon un deuxième rapport, par exemple pour recharger une unité de stockage en énergie électrique.

La transmission du couple est la suivante :
MT->C1-> 17- 27->31-32->28-18->12->ME2.

### Troisième mode de fonctionnement : hybride

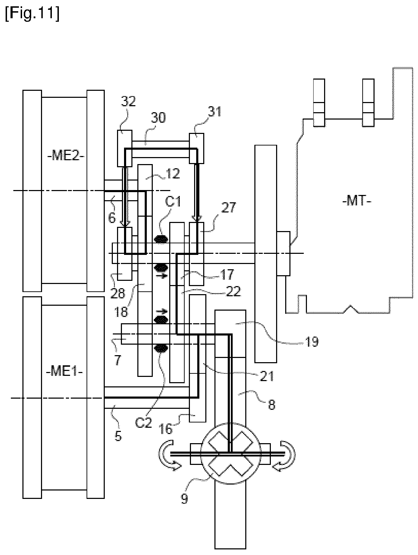

A la figure 11, le coupleur C1 est en position engagée vers la droite pour lier en rotation l'arbre 11 d'entrée du moteur thermique MT et le couple de pignons 17-27, et le coupleur C2 est en position engagée vers la droite pour lier en rotation l'arbre commun de sortie 7 et le pignon 22.

Les trois moteurs MT, ME1 et ME2 fonctionnent simultanément en mode de traction, selon un premier rapport pour le moteur thermique MT et selon le premier rapport pour le moteur électrique secondaire ME2.

La transmission du couple est la suivante :
MT->C1-> 17->22->C2-> 19->8->9
   et
ME1->16->21->19->8->9
   et
ME2->12->18-28->32-31->27-17->C1->22->C2->19->8->9.

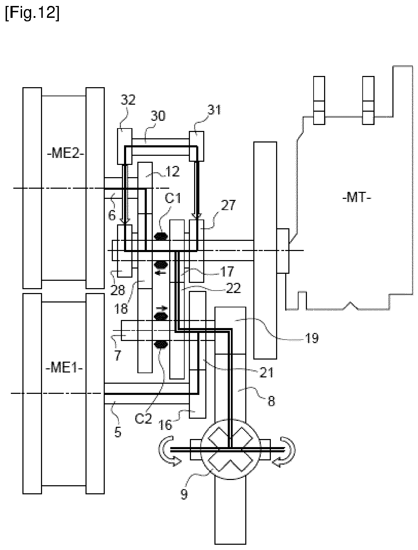

A la figure 12, le coupleur C1 est en position engagée vers la gauche pour lier en rotation l'arbre 11 d'entrée du moteur thermique MT et le couple de pignons 18-28, et le coupleur C2 est en position engagée vers la droite pour lier en rotation l'arbre commun de sortie 7 et le pignon 22.

Les trois moteurs MT, ME1 et ME2 fonctionnent simultanément en mode de traction, selon un deuxième rapport pour le moteur thermique MT et selon le premier rapport pour le moteur électrique secondaire ME2.

La transmission du couple est la suivante :
MT->C1->18-28->32-31->27-17->22->C2->19->8->9
   et
ME1->16->21->19->8->9
   et
ME2-> 12-> 18-28->32-31->27-17->C1->22->C2-> 19->8->9.

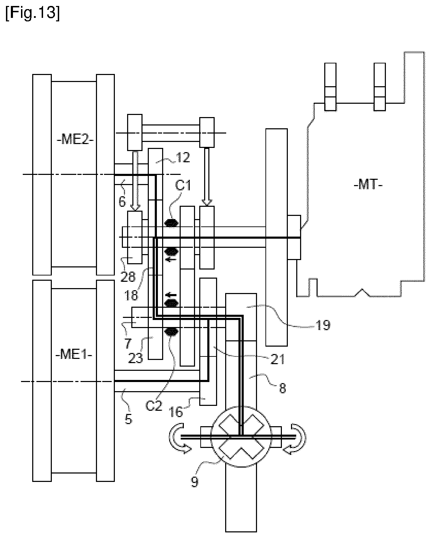

A la figure 13 le coupleur C1 est en position engagée vers la gauche pour lier en rotation l'arbre 11 d'entrée du moteur thermique MT et le couple de pignons 18 28, et le coupleur C2 est en position engagée vers la gauche pour lier en rotation l'arbre commun de sortie 7 et le pignon 23.

Les trois moteurs MT, ME1 et ME2 fonctionnent simultanément en mode de traction, selon un troisième rapport pour le moteur thermique MT et selon le La transmission du couple est la suivante :
MT->C1-> 18->23->C2-> 19->8->9
   et
ME1->16->21->19->8->9
   et
ME2->12->18->23->C2->19->8->9.

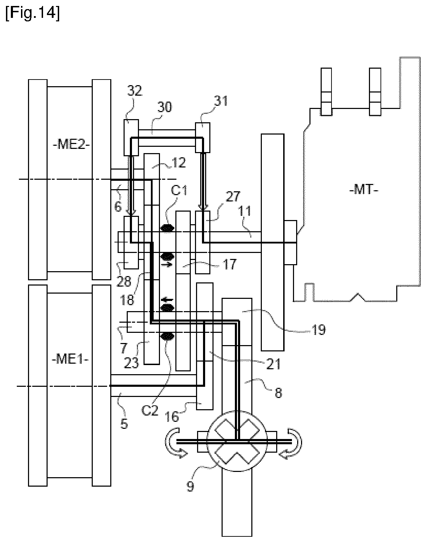

A la figure 14, le coupleur C1 est en position engagée vers la droite pour lier en rotation l'arbre 11 d'entrée du moteur thermique MT et le couple de pignons 17-27, et le coupleur C2 est en position engagée vers la gauche pour lier en rotation l'arbre commun de sortie 7 et le pignon 23.

Les trois moteurs MT, ME1 et ME2 fonctionnent simultanément en mode de traction, selon un quatrième rapport pour le moteur thermique MT et selon le deuxième rapport pour le moteur électrique secondaire ME2.

La transmission du couple est la suivante :
MT ->C 1->27 -17 ->31-32->28-18->23->C2-> 19->8->9
   et
ME1->16->21->19->8->9
   et
ME2->12->18->23->C2->19->8->9.

### Quatrième mode de fonctionnement : hybride avec le moteur thermique en prise directe

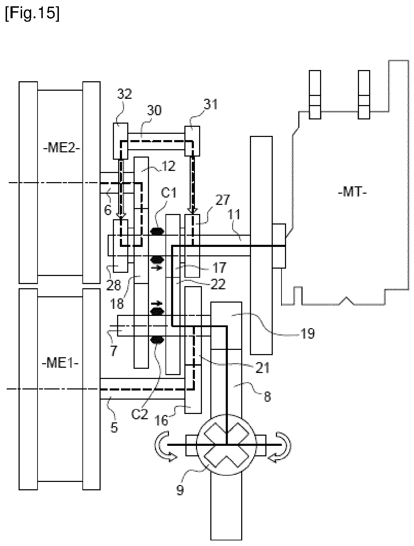

A la figure 15, le coupleur C1 est en position engagée vers la droite pour lier en rotation l'arbre 11 d'entrée du moteur thermique MT et le couple de pignons 17-27, et le coupleur C2 est en position engagée vers la droite pour lier en rotation l'arbre commun de sortie 7 et le pignon 22.

Seul le moteur thermique MT est en mode traction selon un premier rapport.

La transmission du couple est la suivante :
MT->C1->17->22>C2->19->8->9.

Il est aussi possible d'utiliser la machine électrique principale ME1 en génératrice de courant en lui transmettant le couple de la manière suivante : MT->C1->17->22-> C2->16->ME1.

Il est aussi possible d'utiliser la machine électrique secondaire ME2 en génératrice de courant en lui transmettant le couple de la manière suivante : MT->C1-> 17-27->31-32> 28-18->12->ME2.

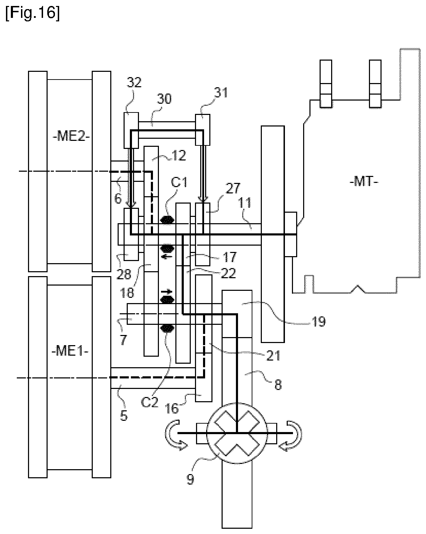

A la figure 16, le coupleur C1 est en position engagée vers la gauche pour lier en rotation l'arbre 11 d'entrée du moteur thermique MT et le couple de pignons 18-28, et le coupleur C2 est en position engagée vers la droite pour lier en rotation l'arbre commun de sortie 7 et le pignon 22.

Seul le moteur thermique MT est en mode traction selon un deuxième rapport.

La transmission du couple est la suivante :
MT->C1->28-18->32-31>27-17->22->C2->19->8->9.

Il est aussi possible d'utiliser la machine électrique principale ME1 en génératrice de courant en lui transmettant le couple de la manière suivante : MT->C1->28-18->32-31->27-17->22->C2->21->16->ME1.

Il est aussi possible d'utiliser la machine électrique secondaire ME2 en génératrice de courant en lui transmettant le couple de la manière suivante : MT->C1-> 18-28-> 12->ME2.

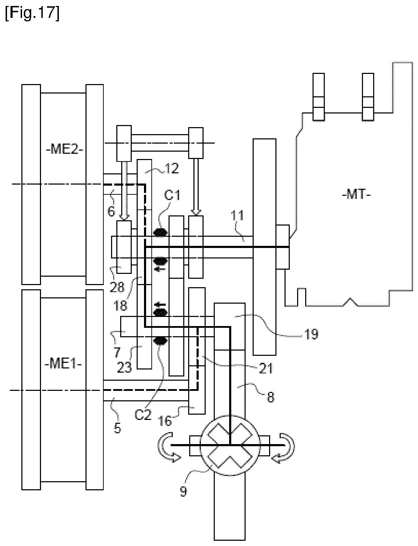

A la figure 17, le coupleur C1 est en position engagée vers la gauche pour lier en rotation l'arbre 11 d'entrée du moteur thermique MT et le couple de pignons 18-28, et le coupleur C2 est en position engagée vers la gauche pour lier en rotation l'arbre commun de sortie 7 et le pignon 23.

Seul le moteur thermique MT est en mode traction selon un troisième rapport.

La transmission du couple est la suivante :
MT->C1-> 18->23->C2-> 19->8->9.

Il est aussi possible d'utiliser la machine électrique principale ME1 en génératrice de courant en lui transmettant le couple de la manière suivante : MT->C1-> 18->23-> C2->21->16->ME1.

Il est aussi possible d'utiliser la machine électrique secondaire ME2 en génératrice de courant en lui transmettant le couple de la manière suivante : MT->C1->18->->12->ME2.

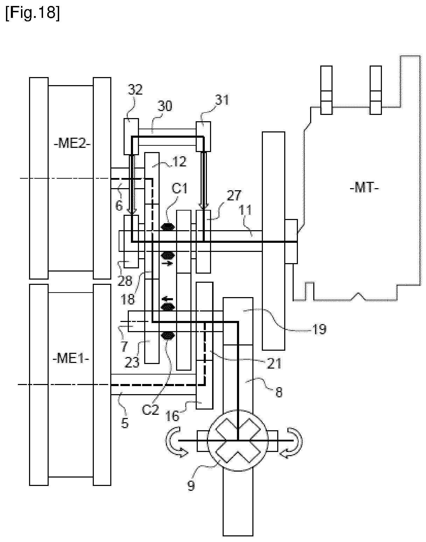

A la figure 18, le coupleur C1 est en position engagée vers la droite pour lier en rotation l'arbre 11 d'entrée du moteur thermique MT et le couple de pignons 17-27, et le coupleur C2 est en position engagée vers la gauche pour lier en rotation l'arbre commun de sortie 7 et le pignon 23.

Seul le moteur thermique MT est en mode traction selon un quatrième rapport.

La transmission du couple est la suivante :
MT->C1-> 17-27->31-32->28-18->23->C2-> 19->8->9.

Il est aussi possible d'utiliser la machine électrique principale ME1 en génératrice de courant en lui transmettant le couple de la manière suivante : MT->C1->17-27->31-32->28-18->23->C2->21->16->ME1.

Il est aussi possible d'utiliser la machine électrique secondaire ME2 en génératrice de courant en lui transmettant le couple de la manière suivante : MT->C1->17-27->31-32->28-18->12->ME2.

### Cinquième mode de fonctionnement : marche arrière

D'une manière générale, un véhicule équipé d'un groupe motopropulseur selon l'invention, qui ne comporte pas d'embrayage démarre uniquement en mode purement électrique, que ce soit en marche avant, ou bien en marche arrière Par rapport à un démarrage en marche avant, pour démarrer en marche arrière, il faut bien entendu inverser le sens de rotation de la ou des machine(s) électrique(s) utilisée(s) en moteur(s) électrique(s) de traction. En principe pour le démarrage en marche arrière, c'est la machine électrique secondaire EM2 qui est utilisée avec le coupleur C1 en position neutre et le coupleur C2 enclenché vers la droite avec le pignon 22.

Pour un démarrage en forte pente il est possible d'associer les deux moteurs électriques ME1 et ME2.

L'utilisation du moteur électrique ME1 est aussi possible, mais avec une efficacité plus réduite pour faire « décoller » le véhicule et manœuvrer à vitesse réduite.

### Deuxième exemple de réalisation

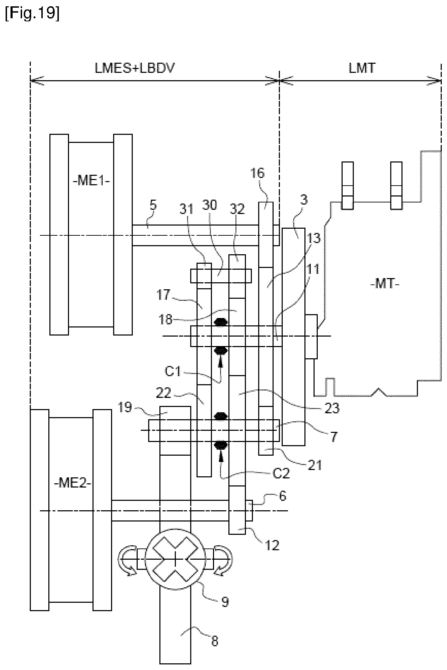

Le groupe motopropulseur hybride GMP de véhicule automobile représenté schématiquement à la figure 19, est composé de trois sources motrices MT, ME1, et ME2 reliées par des arbres d'entrée11, 5, 6, décalés latéralement, dans une boîte de vitesses 4 à arbres parallèles et à engrenages. Conformément aux enseignements de l'invention, selon la direction axiale commune aux arbres parallèles d'entrée 11, 5, 6 de la boîte de vitesses 4, le moteur thermique MT, la boîte de vitesses 4 et les deux machines électriques ME1-ME2 sont agencés axialement et successivement de droite à gauche.

En d'autres termes, selon la direction axiale commune aux arbres parallèles d'entrée 11, 5, 6 de la boîte de vitesses 4 est disposée axialement entre le moteur thermique MT d'une part et les deux machines électriques ME1-ME2 d'autre part.

Ainsi, la largeur totale LGMP du groupe motopropulseur GMP - qui correspond à la somme des largeurs transversales LMT+LBDV+LME respectivement du moteur thermique MT, de la boîte de vitesses 4 et de l'ensemble des deux machines électriques ME1 et ME2 - est réduite Les deux machines électriques ME1 et ME2 sont ici agencées à gauche de la boîte de vitesses 4.

La boîte de vitesses 4 comporte deux coupleurs C1, C2, permettant d'établir sélectivement le transfert du couple fourni par l'arbre d'entrée de chaque source motrice, sur un arbre commun de sortie 7, vers les roues du véhicule. Dans ce mode de réalisation de l'invention illustré par la figure 19, les trois sources motrices sont respectivement une machine électrique principale ME1, une machine électrique secondaire ME2, et un moteur thermique MT. Les couples des trois sources motrices MT, ME1 et ME2 sont réunis dans la boîte de vitesses 4.

L'arbre entrée 11 du moteur thermique MT n'est pas concentrique aux arbres d'entrée 5, 6 des machines électriques ME1 et ME2.

Les trois arbres d'entrée 11, 5, 6 des trois sources motrices MT, ME1 et ME2 sont décalés latéralement les uns par rapport aux autres, et ils sont reliés à l'arbre commun de sortie 7.

La boîte de vitesses 4 comporte ainsi :
- un arbre d'entrée 5 relié au rotor de la machine électrique principale ME1 ;
- un arbre d'entrée 6 relié au rotor de la machine électrique secondaire ME2 ;
- et un arbre d'entrée 11 relié directement au volant d'inertie 3 au vilebrequin du moteur thermique MT.

L'arbre commun de sortie, ou arbre secondaire, 7 entraîne une couronne 8 d'un différentiel 9 relié aux roues du véhicule (non représentées).

L'arbre d'entrée 11 du moteur thermique MT porte deux pignons fous 17, 18 dont chacun engrène avec un pignon fou, 22, 23 respectivement, ces deux pignons fous 22 et 23 étant portés par l'arbre commun de sortie 7.

La boîte 4 ne comporte deux coupleurs C1, C2.

Le premier coupleur C1 est agencé axialement entre les deux pignons fous 17 et 18, et il établit sélectivement la transmission du couple du moteur thermique MT par l'un ou l'autre des deux pignons fous 17 ou 18 sur l'un ou l'autre des deux pignons fous 23 ou 22 respectivement portés par l'arbre commun de sortie 7.

La transmission par les pignons 17 et 22 se fait selon un premier rapport R1, tandis que la transmission du couple par les pignons 18, 23 se fait selon un deuxième rapport R2.

La transmission par les pignons 17-27-31-32-28-18-23 se fait selon un troisième rapport R3, tandis que la transmission du couple par les pignons 18-28-32-31-27-17-22 se fait selon un quatrième rapport R4.

Le deuxième coupleur C2 est agencé axialement entre les deux pignons fous 22 et 23, et il établit sélectivement la liaison en rotation de l'un ou l'autre des deux pignons fous 22 ou 23 avec l'arbre commun de sortie 7.

De la gauche vers la droite, l'arbre commun de sortie 7 vers les roues du véhicule porte successivement un pignon fixe 19 d'attaque sur la couronne 8 du différentiel 9, les deux pignons fous 23 et 22, et un pignon fixe de ligne secondaire 21.

L'arbre d'entrée 5 de la machine électrique principale ME1, porte un seul pignon fixe 16 de renvoi qui, par l'intermédiaire d'un pignon 13 qui est monté fou en rotation sur l'arbre d'entrée 11 du moteur thermique MT, engrène en permanence et indirectement avec le pignon fixe de ligne secondaire 21 lié en rotation à l'arbre commun de sortie 7.

L'arbre d'entrée 6 de la machine électrique secondaire ME2, porte un seul pignon fixe 12 de renvoi qui engrène en permanence avec le pignon fou 23 porté par l'arbre commun de sortie 7.

De la droite vers la gauche, l'arbre d'entrée 11 du moteur thermique MT porte successivement le pignon fou 13, et les deux pignons fous 18 et 17 entre lesquels est agencé le premier coupleur C1.

La boîte de vitesses 4 porte à rotation un arbre supplémentaire 30, qui est parallèle aux arbres d'entrée 11, 5 et 6, qui est monté fou à rotation et qui :
- à son extrémité de gauche, porte un pignon fixe 31 qui engrène en permanence avec le pignon fou 17 ;
- et à son extrémité de droite, porte un pignon fixe 32 qui engrène en permanence avec le pignon fou 18.

Les deux pignons 30 et 31 constituent ainsi un couple de pignons 31-32 liés en rotation.

L'arbre supplémentaire 30 lie ainsi en rotation les pignons 27 et 28, et donc les couples de pignons fous 17-27 et 18-28.

On notera que chaque machine électrique ME1 ou ME2 peut fonctionner en moteur électrique pour participer à la traction du véhicule ou en génératrice électrique pour recharger des batteries de stockage d'énergie électrique.

### Troisième exemple de réalisation

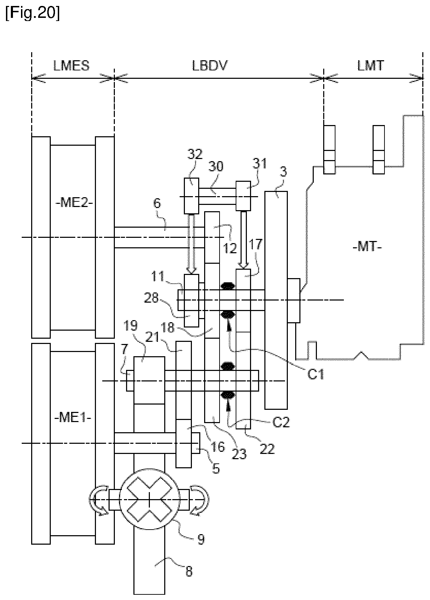

Le groupe motopropulseur hybride GMP de véhicule automobile représenté schématiquement à la figure 20, est composé de trois sources motrices MT, ME1, et ME2 reliées par des arbres d'entrée11, 5, 6, décalés latéralement, dans une boîte de vitesses 4 à arbres parallèles et à engrenages. Conformément aux enseignements de l'invention, selon la direction axiale commune aux arbres parallèles d'entrée 11, 5, 6 de la boîte de vitesses 4, le moteur thermique MT, la boîte de vitesses 4 et les deux machines électriques ME1-ME2 sont agencés axialement et successivement de droite à gauche.

En d'autres termes, selon la direction axiale commune aux arbres parallèles d'entrée 11, 5, 6 de la boîte de vitesses 4 est disposée axialement entre le moteur thermique MT d'une part et les deux machines électriques ME1-ME2 d'autre part.

Ainsi, la largeur totale LGMP du groupe motopropulseur GMP - qui correspond à la somme des largeurs transversales LMT+LBDV+LME respectivement du moteur thermique MT, de la boîte de vitesses 4 et de l'ensemble des deux machines électriques ME1 et ME2 - est réduite

Les deux machines électriques ME1 et ME2 sont ici agencées à gauche de la boîte de vitesses 4, sensiblement dans un même plan orthogonal aux axes de rotation des arbres parallèles d'entrée 11, 5, 6 de la boîte de vitesses 4. La boîte de vitesses 4 comporte deux coupleurs C1, C2, permettant d'établir sélectivement le transfert du couple fourni par l'arbre d'entrée de chaque source motrice, sur un arbre commun de sortie 7, vers les roues du véhicule. Dans le mode de réalisation non limitatif de l'invention, illustré par les figures, les trois sources motrices sont respectivement une machine électrique principale ME1, une machine électrique secondaire ME2, et un moteur thermique MT.

Les couples des trois sources motrices MT, ME1 et ME2 sont réunis dans la boîte de vitesses 4.

L'arbre entrée 11 du moteur thermique MT n'est pas concentrique aux arbres d'entrée 5, 6 des machines électriques ME1 et ME2.

Les trois arbres d'entrée 11, 5, 6 des trois sources motrices MT, ME1 et ME2 sont décalés latéralement les uns par rapport aux autres, et ils sont reliés à l'arbre commun de sortie 7.

La boîte de vitesses 4 comporte ainsi :
- un arbre d'entrée 5 relié au rotor de la machine électrique principale ME1 ;
- un arbre d'entrée 6 relié au rotor de la machine électrique secondaire ME2 ;
- et un arbre d'entrée 11 relié directement au volant d'inertie 3 au vilebrequin du moteur thermique MT.

L'arbre commun de sortie, ou arbre secondaire, 7 entraîne une couronne 8 d'un différentiel 9 relié aux roues du véhicule (non représentées).

L'arbre d'entrée 11 du moteur thermique MT porte deux pignons fous 17, 18 dont chacun engrène avec un pignon fou, 22, 23 respectivement, ces deux pignons fous 22 et 23 étant portés par l'arbre commun de sortie 7.

La boîte 4 ne comporte deux coupleurs C1, C2.

Le premier coupleur C1 est agencé axialement entre les deux pignons fous 17 et 18, et il établit sélectivement la transmission du couple du moteur thermique MT par l'un ou l'autre des deux pignons fous 17 ou 18 sur l'un ou l'autre des deux pignons fous 23 ou 22 respectivement portés par l'arbre commun de sortie 7.

La transmission par les pignons 18 et 22 se fait selon un premier rapport R1, tandis que la transmission du couple par les pignons 17, 23 se fait selon un deuxième rapport R2.

Le deuxième coupleur C2 est agencé axialement entre les deux pignons fous 22 et 23, et il établit sélectivement la liaison en rotation de l'un ou l'autre des deux pignons fous 22 ou 23 avec l'arbre commun de sortie 7.

De la gauche vers la droite, l'arbre commun 7 de sortie vers les roues du véhicule porte successivement un pignon fixe 19 d'attaque sur la couronne 8 du différentiel 9, un pignon fixe de ligne secondaire 21 et les deux pignons fous 23 et 22.

L'arbre d'entrée 5 de la machine électrique principale ME1, porte un seul pignon fixe 16 de renvoi qui engrène en permanence le pignon fixe de ligne secondaire 21 lié en rotation à l'arbre commun de sortie 7.

Le pignon fou 18 porté par l'arbre d'entrée 11 du moteur thermique MT est lié en rotation avec un autre pignon 28 pour constituer un couple de pignons fous 18-28.

L'arbre d'entrée 6 de la machine électrique secondaire ME2, porte un seul pignon fixe 12 de renvoi qui engrène en permanence avec le pignon fou 28 du couple de pignons fous 18-28 porté par l'arbre d'entrée 11 du moteur thermique MT.

Ainsi, de la droite vers la gauche, l'arbre d'entrée 11 du moteur thermique MT porte successivement le pignon fou 17 et le couple de pignons fous 18-28 entre lesquels est agencé le premier coupleur C1.

La boîte de vitesses 4 porte à rotation un arbre supplémentaire 30, qui est parallèle aux arbres d'entrée 11, 5 et 6, qui est monté fou à rotation et qui :
- à son extrémité de droite, porte un pignon fixe 31 qui engrène en permanence avec le pignon fou 17 ;
- et à son extrémité de gauche, porte un pignon fixe 32 qui engrène en permanence avec le pignon fou 28 du couple de pignons fous 18-28.

Les deux pignons 30 et 31 constituent ainsi un couple de pignons 31-32 liés en rotation.

L'arbre supplémentaire 30, qui est décalé latéralement, est illustré schématiquement sur les figures et l'engrènement des pignons 31, 32 avec les pignons 27, 28 est représenté par des flèches.

On notera que chaque machine électrique ME1 ou ME2 peut fonctionner en moteur électrique pour participer à la traction du véhicule ou en génératrice électrique pour recharger des batteries de stockage d'énergie électrique.

## Revendications

1. Groupe motopropulseur hybride de véhicule comportant :
- trois sources motrices (MT, ME1, ME2) parmi lesquelles une machine électrique principale (ME1), une machine électrique secondaire (ME2) et un moteur thermique (MT) dont les arbres sont parallèles ;
- et une boîte de vitesses (4) à arbres parallèles et à engrenages qui comporte trois arbres d'entrée parallèles et décalés latéralement (11, 5, 6) dont chacun est relié à une des trois sources motrices et deux coupleurs (C1, C2) permettant d'établir sélectivement le transfert du couple fourni par l'arbre d'entrée (11, 6) de la machine électrique secondaire (ME2) et du moteur thermique (MT) à un arbre commun (7) de sortie vers les roues du véhicule,
où, selon la direction axiale commune aux arbres d'entrée (11, 5, 6) de la boîte de vitesses (4), la boîte de vitesses (4) est disposée axialement entre, d'une part, le moteur thermique (MT) et, d'autre part, les deux machines électriques (ME1, ME2),
**caractérisé en ce que** le couple du moteur thermique (MT) est envoyé vers l'arbre commun (7) de sortie par l'intermédiaire :
- de deux pignons fous (17, 18) qui sont portés par l'arbre d'entrée du moteur thermique (MT) et entre lesquels est interposé le premier coupleur (C1) ;
- et de deux pignons fous (22, 23) qui sont portés par l'arbre commun (7) de sortie, entre lesquels est interposé le deuxième coupleur (C2), et dont chacun engrène en permanence avec un pignon fou associé (17, 18) porté par l'arbre d'entrée du moteur thermique (MT).

2. Groupe motopropulseur (GMP) selon la revendication 1, **caractérisé en ce que** les deux machines électriques (ME1, ME2) sont agencées sensiblement dans un même plan orthogonal aux arbres parallèles (11, 5, 6) de la boîte de vitesses (4).

3. Groupe motopropulseur selon l'une des revendications précédentes, **caractérisé en ce que** l'arbre d'entrée (5) de la machine électrique principale (M1) est lié en permanence en rotation avec l'arbre commun (7) de sortie par un pignon fixe (16) porté par son arbre d'entrée (5) qui engrène avec un pignon fixe (21) porté par l'arbre commun (7) de sortie.

4. Groupe motopropulseur selon l'une quelconque des revendications précédentes, **caractérisé en ce qu'**un pignon fixe (12) porté par l'arbre d'entrée (6) de la machine électrique secondaire (M2) engrène en permanence avec l'un des deux pignons fous (17, 18) qui sont portés par l'arbre d'entrée du moteur thermique (MT).

5. Groupe motopropulseur selon la revendication 1, **caractérisé en ce que** la boîte de vitesses (4) comporte un arbre parallèle supplémentaire (30) qui est décalé latéralement par rapport à l'arbre d'entrée (11) du moteur thermique (MT) et qui porte deux pignons fixes (31, 32) dont chacun engrène en permanence avec un pignon (27, 28) qui est lié en rotation avec un pignon fou associé (17, 18) des deux pignons fous (17, 18) qui sont portés par l'arbre d'entrée (11) du moteur thermique (MT).

6. Procédé de commande d'un groupe motopropulseur selon les revendications 3 à 5, **caractérisé en ce que** l'ouverture des deux coupleurs (C1, C2), permet de déplacer le véhicule avec seulement la machine électrique principale (EM1).

7. Procédé de commande d'un groupe motopropulseur selon la revendication 6, **caractérisé en ce que** la fermeture du deuxième coupleur (C2) permet de déplacer le véhicule en mode électrique avec seulement la machine électrique secondaire (EM2) selon l'un ou l'autre de deux rapports de transmission.

8. Procédé de commande d'un groupe motopropulseur selon la revendication 6, **caractérisé en ce que** la fermeture du deuxième coupleur (C2) permet de déplacer le véhicule en mode électrique avec la machine électrique principale (EM1) et l'appoint de la machine électrique secondaire (EM2) selon l'un ou l'autre de deux rapports de transmission.

9. Procédé de commande d'un groupe motopropulseur selon les revendications 3 à 5, **caractérisé en ce que** la fermeture du premier coupleur (C1) permet au moteur thermique (MT) d'entraîner la machine électrique secondaire (ME2) en générateur de courant, selon l'un ou l'autre de deux rapports pour recharger les batteries du véhicule, en roulage et à l'arrêt du véhicule.

10. Procédé de commande d'un groupe motopropulseur selon les revendications 3 à 5, **caractérisé en ce que** la fermeture simultanée des deux coupleurs (C1, C2) permet de déplacer le véhicule en mode hybride avec le cumul du moteur thermique (MT), de la machine électrique principale (ME1) et de ma machine électrique secondaire (ME2) selon quatre combinaisons différentes de rapports de transmission du moteur thermique (MT) et de la machine électrique secondaire (ME2).

11. Procédé de commande d'un groupe motopropulseur selon les revendications 3 à 5, **caractérisé en ce que** la fermeture simultanée des deux coupleurs (C1, C2) permet de déplacer le véhicule en mode thermique avec seulement le moteur thermique (MT), selon l'un ou l'autre de quatre rapports de transmission.

12. Procédé selon la revendication 11, **caractérisé en ce que**, pour n'importe lequel desdits quatre rapports de transmission, le moteur thermique (MT) peut entraîner la machine électrique primaire (ME1) en générateur de courant, et/ou la machine électrique secondaire (ME2) en générateur de courant selon l'un ou l'autre de deux rapports, pour recharger les batteries du véhicule en roulage du véhicule.

## Patentansprüche

1. Fahrzeughybridantriebsstrang, umfassend:
- drei Antriebsquellen (MT, ME1, ME2), darunter eine Hauptelektromaschine (ME1), eine sekundäre Elektromaschine (ME2) und einen Verbrennungsmotor (MT), deren Wellen parallel sind;
- und ein Parallelwellen-Zahnradgetriebe (4), das drei parallele und seitlich versetzt angeordnete Eingangswellen (11, 5, 6), von denen jede mit einer der drei Antriebsquellen verbunden ist, sowie zwei Kupplungen (C1, C2) umfasst, wodurch die Übertragung des von der Eingangswelle (11, 6) der sekundären Elektromaschine (ME2) und des Verbrennungsmotors (MT) gelieferten Drehmoments auf eine gemeinsame Ausgangswelle (7) zu den Rädern des Fahrzeugs selektiv ermöglicht wird, wobei das Getriebe (4) in der den Eingangswellen (11, 5, 6) des Getriebes (4) gemeinsamen Achsrichtung axial zwischen einerseits dem Verbrennungsmotor (MT) und andererseits den beiden Elektromaschinen (ME1, ME2) angeordnet ist, **dadurch gekennzeichnet, dass** das Drehmoment des Verbrennungsmotors (MT) auf die gemeinsame Ausgangswelle (7) übertragen wird, und zwar über:
- zwei Losräder (17, 18), die von der Eingangswelle des Verbrennungsmotors (MT) getragen werden und zwischen denen die erste Kupplung (C1) eingefügt ist;
- und zwei Losräder (22, 23), die von der gemeinsamen Ausgangswelle (7) getragen werden, zwischen denen die zweite Kupplung (C2) eingefügt ist und die jeweils mit einem zugehörigen Losrad (17, 18), das von der Eingangswelle des Verbrennungsmotors (MT) getragen wird, permanent kämmen.

2. Antriebsstrang (GMP) nach Anspruch 1, **dadurch gekennzeichnet, dass** die beiden Elektromaschinen (ME1, ME2) im Wesentlichen in derselben Ebene orthogonal zu den parallelen Wellen (11, 5, 6) des Getriebes (4) angeordnet sind.

3. Antriebsstrang nach einem der vorstehenden Ansprüche,
**dadurch gekennzeichnet, dass** die Eingangswelle (5) der Hauptelektromaschine (M1) permanent drehfest mit der gemeinsamen Ausgangswelle (7) verbunden ist, und zwar durch ein von seiner Eingangswelle (5) getragenes Festrad (16), das mit einem von der gemeinsamen Ausgangswelle (7) getragenen Festrad (21) kämmt.

4. Antriebsstrang nach einem der vorstehenden Ansprüche,
**dadurch gekennzeichnet, dass** ein von der Eingangswelle (6) der sekundären Elektromaschine (M2) getragenes Festrad (12) mit einem der beiden Losräder (17, 18), die von der Eingangswelle des Verbrennungsmotors (MT) getragen werden, permanent kämmt.

5. Antriebsstrang nach Anspruch 1, **dadurch gekennzeichnet, dass** das Getriebe (4) eine zusätzliche parallele Welle (30) umfasst, die seitlich versetzt zur Eingangswelle (11) des Verbrennungsmotors (MT) angeordnet ist und zwei Festräder (31, 32) trägt, die jeweils mit einem Ritzel (27, 28) permanent kämmen, das mit einem zugehörigen Losrad (17, 18) der beiden Losräder (17, 18), die von der Eingangswelle (11) des Verbrennungsmotors (MT) getragen werden, drehfest verbunden ist.

6. Verfahren zur Steuerung eines Antriebsstrangs nach den Ansprüchen 3 bis 5, **dadurch gekennzeichnet, dass** das Öffnen der beiden Kupplungen (C1, C2) ermöglicht, dass sich das Fahrzeug nur mit der Hauptelektromaschine (EM1) fortbewegt.

7. Verfahren zur Steuerung eines Antriebsstrangs nach Anspruch 6,
**dadurch gekennzeichnet, dass** das Schließen der zweiten Kupplung (C2) ermöglicht, dass sich das Fahrzeug im Elektromodus nur mit der sekundären Elektromaschine (EM2) entsprechend dem einen oder dem anderen von zwei Übersetzungsverhältnissen fortbewegt.

8. Verfahren zur Steuerung eines Antriebsstrangs nach Anspruch 6,
**dadurch gekennzeichnet, dass** das Schließen der zweiten Kupplung (C2) ermöglicht, dass sich das Fahrzeug im Elektromodus mit der Hauptelektromaschine (EM1) und Unterstützung durch die sekundäre Elektromaschine (EM2) entsprechend dem einen oder dem anderen von zwei Übersetzungsverhältnissen fortbewegt.

9. Verfahren zur Steuerung eines Antriebsstrangs nach den Ansprüchen 3 bis 5, **dadurch gekennzeichnet, dass** das Schließen der ersten Kupplung (C1) ermöglicht, dass der Verbrennungsmotor (MT) die sekundäre Elektromaschine (ME2) entsprechend dem einen oder dem anderen von zwei Verhältnissen als Stromgenerator antreibt, und zwar zum Aufladen der Fahrzeugbatterien während der Fahrt und beim Halten des Fahrzeugs.

10. Verfahren zur Steuerung eines Antriebsstrangs nach den Ansprüchen 3 bis 5, **dadurch gekennzeichnet, dass** das gleichzeitige Schließen der beiden Kupplungen (C1, C2) ermöglicht, dass sich das Fahrzeug im Hybridmodus fortbewegt, wobei der Verbrennungsmotors (MT), die Hauptelektromaschine (ME1) und die sekundäre Elektromaschine (ME2) entsprechend vier verschiedenen Kombinationen von Übersetzungsverhältnissen des Verbrennungsmotors (MT) und der sekundären Elektromaschine (ME2) zusammenwirken.

11. Verfahren zur Steuerung eines Antriebsstrangs nach einem der Ansprüche 3 bis 5, **dadurch gekennzeichnet, dass** das gleichzeitige Schließen der beiden Kupplungen (C1, C2) ermöglicht, dass sich das Fahrzeug im Verbrennungsmodus nur mit dem Verbrennungsmotor (MT) entsprechend dem einen oder dem anderen von vier Übersetzungsverhältnissen fortbewegt.

12. Verfahren nach Anspruch 11, **dadurch gekennzeichnet, dass** der Verbrennungsmotor (MT) die Hauptelektromaschine (ME1) bei einem beliebigen von vier Übersetzungsverhältnissen als Stromgenerator antreiben kann und/oder die sekundäre Elektromaschine (ME2) entsprechend dem einen oder anderen von zwei Übersetzungsverhältnissen als Stromgenerator antreiben kann, um die Fahrzeugbatterien während der Fahrt des Fahrzeugs wieder aufzuladen.

## Claims

1. Hybrid vehicle power train comprising:
- three drive sources (MT, ME1, ME2) including a main electric machine (ME1), a secondary electric machine (ME2) and a heat engine (MT) having parallel shafts;
- and a gearbox (4) with parallel shafts and with gear sets, which comprises three parallel and laterally offset input shafts (11, 5, 6), each of which is connected to one of the three drive sources, and two couplings (C1, C2) for selectively transferring the torque supplied by the input shaft (11, 6) of the secondary electric machine (ME2) and the heat engine (MT) to a common output shaft (7) leading to the vehicle wheels, wherein, in the axial direction common to the input shafts (11, 5, 6) of the gearbox (4), the gearbox (4) is arranged axially between the heat engine (MT) and the two electric machines (ME1, ME2), **characterized in that** the torque of the heat engine (MT) is sent to the common output shaft (7) via:
- two idler gears (17, 18) which are supported by the input shaft of the heat engine (MT) and between which the first coupling (C1) is positioned;
- and two idler gears (22, 23) which are supported by the common output shaft (7), between which the second coupling (C2) is positioned, and each of which gears permanently meshes with an associated idler gear (17, 18) supported by the input shaft of the heat engine (MT).

2. Power train (GMP) according to claim 1, **characterized in that** the two electric machines (ME1, ME2) are arranged substantially in the same plane orthogonal to the parallel shafts (11, 5, 6) of the gearbox (4).

3. Power train according to one of the preceding claims,
**characterized in that** the input shaft (5) of the main electric machine (M1) is permanently rotationally connected to the common output shaft (7) by a fixed gear (16) supported by its input shaft (5) which meshes with a fixed gear (21) supported by the common output shaft (7).

4. Power train according to any one of the preceding claims,
**characterized in that** a fixed gear (12) supported by the input shaft (6) of the secondary electric machine (M2) permanently meshes with one of the two idler gears (17, 18) which are supported by the input shaft of the heat engine (MT).

5. Power train according to claim 1, **characterized in that** the gearbox (4) comprises an additional parallel shaft (30) which is laterally offset with respect to the input shaft (11) of the heat engine (MT) and which supports two fixed gears (31, 32), each of which meshes permanently with a gear (27, 28) which is rotationally connected to an associated idler gear (17, 18) of the two idler gears (17, 18) which are supported by the input shaft (11) of the heat engine (MT).

6. Method for controlling a power train according to claims 3 to 5,
**characterized in that** opening the two couplings (C1, C2) enables the vehicle to move using only the main electric machine (EM1).

7. Method for controlling a power train according to claim 6,
**characterized in that** the closure of the second coupling (C2) enables the vehicle to move in electric mode using only the secondary electric machine (EM2) according to either of two transmission ratios.

8. Method for controlling a power train according to claim 6,
**characterized in that** the closure of the second coupling (C2) enables the vehicle to move in electric mode using the main electric machine (EM1) backed up by the secondary electric machine (EM2) according to either of two transmission ratios.

9. Method for controlling a power train according to claims 3 to 5,
**characterized in that** the closure of the first coupling (C1) enables the heat engine (MT) to drive the secondary electric machine (ME2) to generate current according to either of two ratios, so as to recharge the batteries of the vehicle when the vehicle is in motion and when it is stationary.

10. Method for controlling a power train according to claims 3 to 5,
**characterized in that** the simultaneous closure of the two couplings (C1, C2) enables the vehicle to move in hybrid mode using the combination of the heat engine (MT), the main electric machine (ME1) and the secondary electric machine (ME2) according to four different combinations of transmission ratios of the heat engine (MT) and the secondary electric machine (ME2).

11. Method for controlling a power train according to claims 3 to 5,
**characterized in that** the simultaneous closure of the two couplings (C1, C2) enables the vehicle to move in heat engine mode using only the heat engine (MT) according to either of four transmission ratios.

12. Method according to claim 11, **characterized in that,** for any of said four transmission ratios, the heat engine (MT) can drive the main electric machine (ME1) to generate current and/or the secondary electric machine (ME2) to generate current according to either of two ratios, so as to recharge the vehicle batteries when the vehicle is in motion.
